Europäisches Patentamt

European Patent Office

Office européen des brevets

(19)

(11) Veröffentlichungsnummer: **0 237 594 B1**

(12) **EUROPÄISCHE PATENTSCHRIFT**

(45) Veröffentlichungstag der Patentschrift: 05.06.91

(51) Int. Cl.⁵: **A47J 41/00**

(21) Anmeldenummer: **86103614.3**

(22) Anmeldetag: **18.03.86**

(54) **Isolierkanne.**

(43) Veröffentlichungstag der Anmeldung:
**23.09.87 Patentblatt 87/39**

(45) Bekanntmachung des Hinweises auf die
Patenterteilung:
**05.06.91 Patentblatt 91/23**

(84) Benannte Vertragsstaaten:
**AT BE CH FR GB IT LI LU NL SE**

(56) Entgegenhaltungen:
CH-A- 321 449          DE-U- 1 956 713
DE-U- 7 440 131        DE-U- 8 518 647
FR-A- 378 019          FR-A- 2 120 637
GB-A- 2 100 582        US-A- 1 975 241

(73) Patentinhaber: **Nickel, Hartmut**
**Schiltberger Strasse 5**
**W-8032 Gräfelfing(DE)**

(72) Erfinder: **Nickel, Hartmut**
**Schiltberger Strasse 5**
**W-8032 Gräfelfing(DE)**

(74) Vertreter: **Marx, Lothar, Dr. et al**
**Patentanwälte Schwabe, Sandmair, Marx**
**Stuntzstrasse 16 Postfach 86 02 45**
**W-8000 München 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Isolierkanne für Getränke der im Oberbegriff des Anspruchs 1 angegebenen Gattung, wie sie bspw. in Krankenhäusern eingesetzt werden kann.

Aus der DE-OS 2 531 675 geht ein Isolierbehälter mit einem Glaseinsatz hervor, der bereits bei leichten Erschütterungen beschädigt werden kann. Dieser Isolierbehälter ist also für den Einsatz in Krankenhäusern nicht geeignet.

Weiterhin ist aus dem DE-GM 8 009 575 eine Säuglings-Flasche bekannt, bei der zwischen einem Innen- und einem Außenbehälter ein Schaumstoff angeordnet ist. Hierbei ist ein konstruktiv aufwendiger Verschlußbereich für einen Deckel vorgesehen.

Ein ähnlicher Isolierbehälter, dessen Zwischenwand aus Schaumstoff besteht, ist aus dem DE-GM 7 440 131 bekannt.

Weiterhin geht aus der DE-PS 3 145 916 eine Metall-Thermosflasche hervor, deren Innenbehälter aus Edelstahl besteht; als Isolierschicht dient ein evakuierter Zwischenraum, so daß die handhabung dieses Isolierbehälters mit einer gewissen Vorsicht erfolgen muß, um die Außenwand nicht zu beschädigen und damit das Vakuum aufzuheben.

In dem DE-GM 7 736 909 wird ein Isolierbehälter beschrieben, bei dem als Isolierschicht eine im Bereich der Innenseite eines Innenbehälters angeordnete, doppelwandige Wellkartonauflage dient. Für hohe Temperaturen und/oder die rauhe Behandlung, wie sie im Massenbetrieb eines Krankenhauses üblich ist, ist dieser Behälter nicht geeignet.

Weiterhin wird in der US-PS 3 037 652 ein Behälter mit einer Schutzschicht beschrieben, dessen Innenbehälter aus Glas oder einem widerstandsfähigen Kunststoff besteht. Dieser Innenbehälter wird von einer Schaumstoffschicht umgeben, die an ihrer Außenseite mit einer Schutzschicht aus einem dekorativen, gegenüber Feuchtigkeit unempfindlichen Material versehen ist.

Eine ähnliche Isolierkanne der angegebenen Gattung geht aus dem DE-GM 1 956 713 hervor und weist einen Innenbehälter aus Kunststoff, einen Außenbehälter aus schlagfestem Kunststoff, einen Kunststoff-Schaum zwischen Innen- und Außenbehälter sowie einen auf der Auslaßöffnung befestigten Deckel aus einem Kunststoff auf.

Keine der bisher bekanntgewordenen Isolierkannen erfüllt jedoch die vielfältigen Anforderungen, wie sie in modernen Großküchen gestellt werden, wo das Abfüllen und Verschließen solcher Isolierkannen nach Art eines Industriebetriebes "am Fließband" erfolgt. Solche Großküchen befinden sich bspw. in Kantinen, Hotels, Krankenhäusern, Sanatorien, Altenheimen und ähnlichen Institutionen, wobei wegen der großen Zahl der in Benutzung befindlichen Isolierkannen sowohl die Handhabung als auch die Reinigung in Spülmaschinen problemlos möglich sein müssen.

Bei dem Isolierbehälter nach dem DE-GM 1 956 713 ist bspw. nachteilig, daß der Deckel aufgeschraubt werden muß, d.h., das Verschließen des Isolierbehälters ist relativ umständlich und kann insbesondere nicht mit einer einzigen Handbewegung durchgeführt werden, da bei der Schraubbewegung Deckel und Behälter relativ zueinander verdreht werden müssen.

Der Erfindung liegt deshalb die Aufgabe zugrunde, eine Isolierkanne der angegebenen Gattung zu schaffen, bei der die industriellen Anforderungen einer modernen Großküche erfüllt werden und bspw. der oben erwähnte Nachteil nicht auftritt.

Insbesondere soll eine Isolierkanne vorgeschlagen werden, die sehr rasch mit einer einzigen Handbewegung verschlossen werden kann und bruchsicher, verschleißfest und spülmaschinenfest ist.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen zunächst darauf, daß diese Isolierkanne aufgrund der verwendeten Materialen, nämlich des Innenbehälters aus Edelstahl und des Außenbehälters aus schlagfestem Kunststoff bzw. entsprechenden Materialen für den Deckel absolut spülmaschinenfest ist, also auch in den Geschirrspülmaschinen gereinigt werden kann, wie sie in Großküchen eingesetzt werden. Weiterhin ist diese Isolierkanne geschmacksneutral, so daß sie nacheinander für verschiedene Getränke, bspw. Kaffee, Tee, Kakao usw., eingesetzt werden kann.

Um das Abkühlen des Getränkes in dem Isolierbehälter noch weiter zu verlangsamen, kann der Innenbehälter aus Edelstahl vor dem Einfüllen des Getränkes aufgeheizt werden, so daß auch bei relativ langen Transportstrecken zwischen der Küche und dem eigentlichen Benutzungsort, bspw. einem Krankenzimmer, die Temperatur des Getränkes noch ausreichend hoch ist.

Dabei wird darauf abgestellt, daß in den erwähnten Institutionen ein zentrales Speisenverteilungssystem vorgesehen ist, das auf die Versorgung von Einzelpersonen abgestimmt ist. Das Aufnahmevolumen dieser Isolierkanne sollte deshalb etwa 0,35 bis 0,5 1 betragen.

Diese Isolierkanne kann mit den verschiedenen, zur Verfügung stehenden Transportsystemen befördert werden, bspw. mittels eines Tablett-Transportwagens, der durch Gänge geschoben, in Aufzügen transportiert, über Steigungen und Rampen geführt und manchmal mittels eines Lastkraftwagens zu externen Gebäuden gebracht werden muß.

Die noch zu erläuternden Isoliermaßnahmen gewährleisten, möglicherweise in Verbindung mit der vorherigen Aufheizung des Innenbehälters aus Edelstahl, daß ohne zusätzliche externe Isoliermaßnahmen, wie bspw. Abdecken der Isolierkanne mittels einer getrennten Isolierhaube, das Getränk auch nach etwa 60 Minuten noch eine ausreichende Temperatur hat.

Der Deckel kann mit einer einzigen handbewegung leicht abgenommen und aufgesetzt werden; es ist also keine Verschraubung des Deckels erforderlich, wie sie bei handelüblichen, größeren Isolierbehältern notwendig ist.

Durch entsprechende Formgebung können mehrere Isolierbehälter übereinander gestapelt werden, wie es bspw. für den Transport mehrerer Isolierbehälter zu einer bestimmten Krankenstation erforderlich ist, von der aus dann die einzelnen Patienten bedient werden.

Die verwendeten Materialien gewährleisten eine hohe Bruchsicherheit und Verschleißfestigkeit der Isolierkanne, so daß sie auch einen Fall aus relativ großer Höhe aushalten kann.

Zweckmäßigerweise wird im Bereich des Deckels eine Entlüftungsöffnung vorgesehen, so daß sich nach dem Einfüllen des heißen Getränkes und nach dem Verschließen des Behälters mittels des Deckels kein Unter- oder Überdruck bilden kann, der beim Öffnen des Isolierbehälters eine Verletzungsgefahr darstellen würde.

Die Abdichtung zwischen Behälter und Deckel ist so hoch, daß auch bei starken Erschütterungen oder Bewegungen des Isolierbehälters keine Flüssigkeit austreten kann.

Die Erfindung wird im folgenden anhand eines Ausführungsbeispiels unter Bezugnahme auf die beiliegenden, schematischen Zeichnungen näher erläutert. Es zeigen

Fig. 1     einen Schnitt durch eine Ausführungsform einer Isolierkanne mit aufgesetztem Deckel,

Fig. 2     im vergrößertem Maßstab eine Detailansicht des Bereiches, der in Fig. 1 durch einen Kreis umgeben ist,

Fig. 3     eine Ansicht von unten auf den Deckel,

Fig. 4     einen Schnitt durch den Deckel nach Fig. 3,

Fig. 5     einen Schnitt durch eine weitere Ausführungsform eines Deckels,

Fig. 6     einen Schnitt durch eine weitere Ausführungsform eines Deckels, und

Fig. 7     einen Schnitt durch den Innenbehälter, auf den eine weitere Ausführungsform des Deckels aufgesetzt ist.

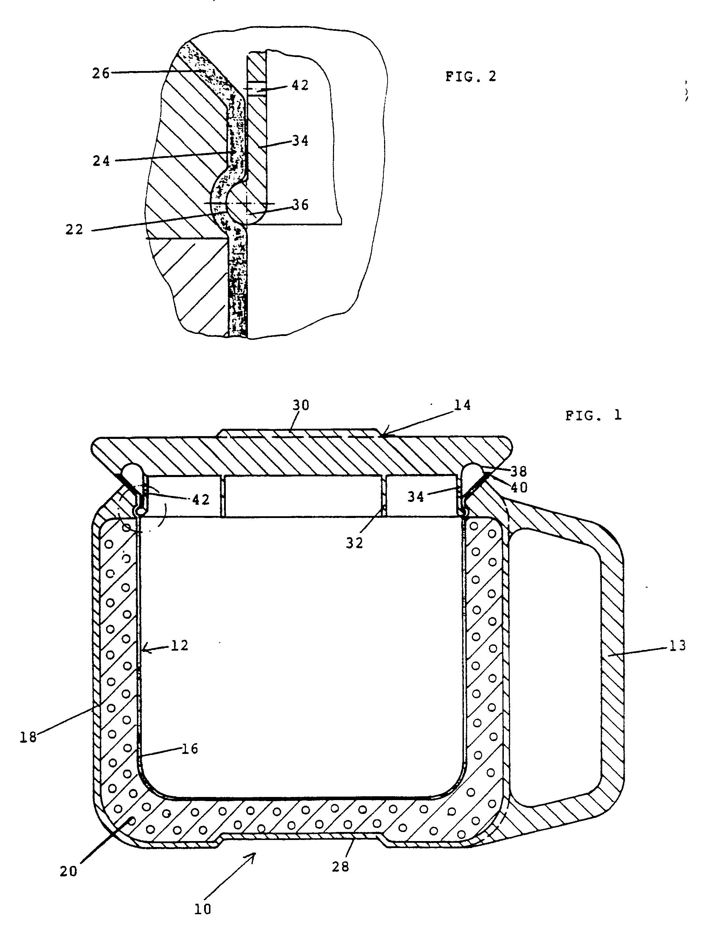

Die in Fig. 1 dargestellte und allgemein durch das Bezugzeichen 10 angedeutete Isolierkanne weist einen Unterteil 12 mit einem Griff 13 sowie einen fest mit dem Unterteil 12 verbindbaren Deckel 14 auf.

Der Unterteil 12 enthält einen Innenbehälter 16 aus Edelstahl und einen Außenbehälter 18 aus einem schlagfestem Kunststoff, wie bspw. Polyamid, Polyprophylen oder ABS.

Der Zwischenraum zwischen dem Innenbehälter 16 und dem Außenbehälter 18 ist mit einem Kunststoffschaum gefüllt, bspw. mit einem Polyurethan-Schaum 20.

Das flüssige und damit gießfähige Ausgangsmaterial für den Kunststoff-Schaum 20 kann in den Zwischenraum eingegossen werden, so daß der Innenbehälter 16 und der Außenbehälter 18 eine Art Form bilden. Als Alternative hierzu ist es auch möglich, die Zwischenwand aus dem Kunststoffschaum 20 fertigzustellen und anschließend auf den Innenbehälter 16 aufzubringen.

Es ist ferner möglich, den Außenbehälter 18 zusammen mit dem für den Kunststoffschaum vorgesehenen Raum 20 in einem Stück zu fertigen, wobei die Teile 18 und 20 eine Einheit bilden und aus Isolationsgründen aus einem Kunststoff mit vernetzter Oberfläche bestehen. Hierfür kommen Polyamid oder POM in Frage.

Wie man in Fig. 1 erkennt, ist der Griff 13 mit einer Seitenfläche des Außenbehälters 18 verbunden, so daß diese Isolierkanne 10 ähnlich wie eine Kaffee- oder Tee-Kanne gehandhabt werden kann.

Obwohl im Prinzip der Innenbehälter, in Draufsicht gesehen, eine rechteckige, insbesondere quadratische Querschnittsform haben kann, wird nach einer bevorzugten Ausführungsform eine Kreisform verwendet, d.h., der Innenbehälter 16 aus Edelstahl hat etwa Zylinderform.

Am oberen Ende des Unterteils 12 ragt der Innenbehälter 16 aus Edelstahl über die Schaumstoff-Schicht 20 hinaus und ist mit einer ringförmigen, nach außen gerichteten Vertiefung 22 versehen, wie man insbesondere in Fig. 2 erkennt. Diese Vertiefung 22 erstreckt sich ringförmig um die gesamte obere Auslaßöffnung des Innenbehälters 16. An die Vertiefung 22 schließt sich ein kurzer, stegförmiger Endbereich 24 an, der in eine schräg nach außen gerichtete Gießkante 26 ausläuft. Wie man aus den Figuren 1 und 2 erkennt, schließt der Außenbehälter 18 die Schaumstoffschicht 20 oben ab und liegt an der Außenfläche der Gießkante 26 an, wodurch sich auch in diesem Bereich eine Isolierung des Innenbehälters 16 sowie eine flüssigkeitsdichte Verbindung zwischen Innenbehälter 16 und Außenbehälter 18 ergibt.

Die Unterseite des Außenbehälters 18 ist in ihrer Mitte mit einer großflächigen Vertiefung 218 versehen. Der aus Fig. 1 ersichtliche Deckel 14 weist an seiner Oberseite eine komplementäre Erhöhung 30 auf, die in die Vertiefung 28 formschlüssig eingesetzt werden kann. Auf diese Weise lassen sich mehrere Isolierkannen 10 senkrecht übereinander stapeln.

Der Deckel 14 ist an seiner nach unten zum Unterteil 12 hin gerichteten Seiten mit einem ringförmigen, inneren Steg 32 und mit einem äußeren, ringförmigen Steg 34 versehen, der an seinem unteren Ende einen wulstförmigen, in die Vertiefung 22 passenden Vorsprung 36 aufweist.

Radial nach außen schließt sich an den äußeren, ringförmigen Steg 34 eine rinnenförmige Vertiefung 38 an, deren gegenüberliegender Rand 40 in Anlage an die Oberseite der Gießkante 26 kommt, wie man in Fig. 1 erkennt.

Der ringförmige äußere Steg 34 ist mit mindestens einer Entlüftungsöffnung 42 versehen, so daß der Raum zwischen dem Steg 34, der Gießkante 26 und der rinnenförmigen Vertiefung 38 als Druckausgleichsraum dient und damit das Auftreten von Über- oder Unterdrücken in der verschlossenen Isolierkanne 10 verhindert.

Denn wenn das Getränk mit einer Temperatur von etwa 90°C in die Isolierkanne 10 eingefüllt und diese dann verschlossen wird, so entsteht ein Überdruck, der sich beim Abkühlen des Getränkes ohne jede Entlüftungsmöglichkeit in einen Unterdruck verwandeln würde.

Bei der Ausführungsform nach den Figuren 1 und 2 verläuft die Entlüftungsöffnung 42 im rechten Winkel zu dem ringförmigen Steg 34, und zwar an einer Stelle, die mit der Gießkante 26 zusammenfällt, wie man in Fig. 2 erkennt.

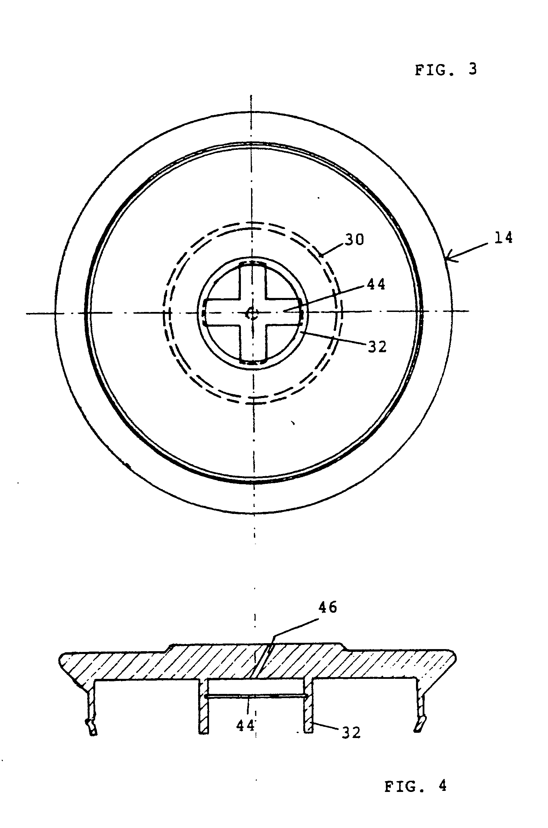

Die Figuren 3 und 4 zeigen eine andere Ausführungsform des Deckels 14, bei der in dem inneren, ringförmigen Steg 32 ein kreuzförmiges Kunststoffteil 44 eingesetzt ist. Die Mitte dieses kreuzförmigen Kunststoffteiles 44 fällt mit der Mitte des Deckels 14 zusammen.

In diesem Fall befindet sich die Entlüftungsöffnung 46 nicht in dem äußeren, ringförmigen Steg 34, sondern beginnt an der Unterseite in der Mitte des Deckels und verläuft dann schräg nach außen zur Oberseite des Deckels, wie man in Fig. 4 bei der Entlüftungsöffnung 46 erkennt.

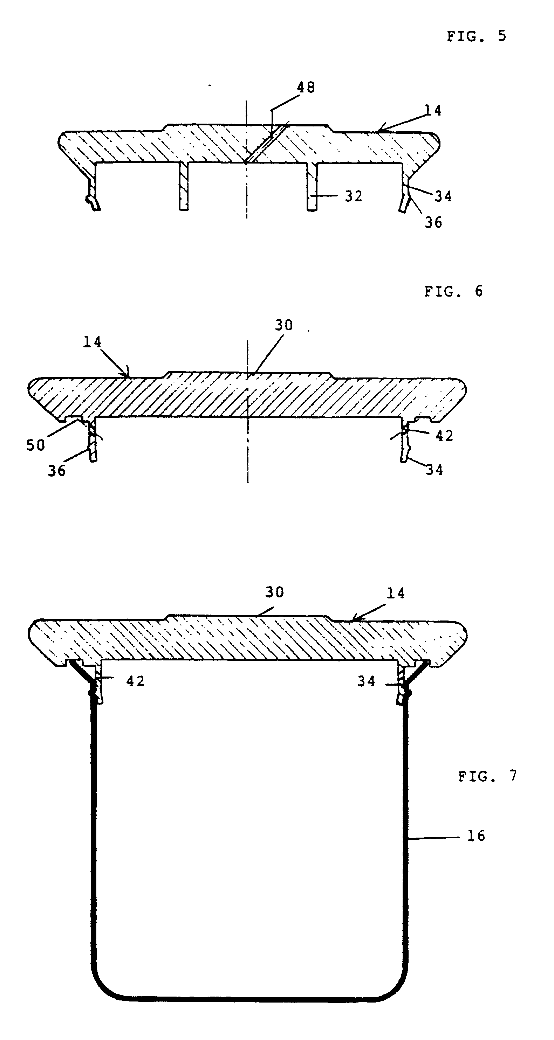

Fig. 5 zeigt eine Ausführungsform des Deckels 14, bei der kein kreuzförmiges Kunststoffteil 44 vorgesehen ist. Die Entlüftungsöffnung 48 erstreckt sich, beginnend in der Mitte des Deckels 14, von der Unterseite schräg nach oben, und zwar mit einem größeren Neigungswinkel als die Entlüftungsöffnung 46 bei der Ausführungsform nach Fig. 4.

Fig. 6 zeigt eine Variante, bei der sich die Entlüftungsöffnung 42 in dem ringförmigen Steg 34 schräg nach oben von innen nach außen erstreckt, d.h., ein wesentlicher Unterschied zur Ausführungsform nach den Figuren 1 und 2 liegt darin, daß die Entlüftungsöffnung 42 nicht senkrecht zu dem ringförmigen Steg 34 verläuft.

Außerdem befindet sich bei dem Deckel 14 nach den Figuren 4, 5 und 6 der wulstförmige Vorsprung 36, anders als bei der Ausführungsform nach Fig. 2, nicht am unteren Ende des äußeren, ringförmigen Steges 34, sondern etwa in seiner Mitte. Auch hierdurch wird eine einwandfreie Abdichtung gewährleistet.

Wie man aus den Figuren 6 und 7 erkennt, weist der Deckel 14 an seiner Unterseite eine ringförmige Vertiefung 50 auf, in die der obere Rand der Gießkante 26 aufgenommen wird.

Die im Querschnitt etwa halbkreisförmige Vertiefung 22 am oberen Randbereich des Innenbehälters 16 aus Edelstahl kann als Sicke ausgebildet werden, wie man in Fig. 2 erkennt, d.h., die gesamte Wand des Innenbehälters 16 wird, bspw. durch Eindrücken verformt, so daß sich auf einer Seite die halbkreisförmige Vertiefung 22 und auf der anderen Seite ein entsprechender, halbkreisförmiger Vorsprung ergibt, der die Verbindung zwischen Edelstahlbehälter 16 und Außenbehälter 18 in diesem Bereich noch weiter verbessert.

Obwohl bei den bisher beschriebenen und gezeigten Ausführungsformen die Innenfläche des Innenbehälters 16 mit der Vertiefung 22 für die Aufnahme des Vorsprungs 36 versehen wird, ist auch eine umgekehrte Ausgestaltung möglich, nämlich eine Vertiefung in dem äußeren, ringförmigen Steg 34 und ein dazu komplementärer Vorsprung am Innenbehälter 16 aus Edelstahl.

Der Deckel 14 kann mit einer Hand durch einfaches Aufdrücken mit dem Unterteil 12 verbunden werden, wobei die Vertiefung 22 und der Vorsprung 36 form- und kraftschlüssig miteinander in Eingriff kommen. Die erzielte Dichtung ist so gut, daß auch bei starken Erschütterungen der Isolierkanne 10 keine Flüssigkeit austreten kann.

Ein besonderes geeignetes Material für die Fertigung des Deckels 14 stellt weiches Polyamid oder Polycarbonat dar.

## Ansprüche

1. Isolierkanne
   a) mit einem Innenbehälter (16),
   b) mit einem Außenbehälter (18) aus schlagfestem Kunststoff,
   c) mit einem Kunststoff-Schaum (20) zwischen dem Innenbehälter (16) und dem Außenbehälter (18), und
   d) mit einem auf der Auslaßöffnung befestigbaren Deckel (14) aus Kunststoff, **gekennzeichnet durch** die folgenden Merkmale:
   e) der Innenbehälter (16) besteht aus Edelstahl; und

f) der Deckel (14) weist einen nach unten ragenden, ringförmigen steg (34) auf, der über eine Nut/Feder-Verbindung in Eingriff mit dem oberen Randbereich des Innenbehälters (16) bringbar ist.

2. Isolierkanne nach Anspruch 1, dadurch gekennzeichnet, daß der Innenbehälter (16) Zylinderform hat, und daß der ring-förmige steg (34) des Deckels (14) mit einem radial nach außen gerichteten Vorsprung (36) versehen ist, der in einer Vertiefung (22) im Bereich der oberen Auslaßöffnung des Innenbehälters (16) aus Edelstahl aufgenommen ist.

3. Isolierkanne nach Anspruch 2, dadurch gekennzeichnet, daß die Vertiefung (22) als Sicke ausgebildet ist.

4. Isolierkanne nach einem der Ansprüche 1 bis 3, dadurch gekennzeichnet, daß die Unterseite des Außenbehälters (18) mit einer großflächigen Vertiefung (28) für die Aufnahme einer komplementären Erhöhung (30) an der Oberfläche des Deckels (14) versehen ist.

5. Isolierkanne nach einem der Ansprüche 1 bis 4, gekennzeichnet durch eine im Deckel (14) vorgesehene Entlüftungsöffnung (42, 46, 48).

6. Isolierkanne nach Anspruch 5, dadurch gekennzeichnet, daß die Entlüftungsöffnung (46, 48) von der Mitte des Deckels (14) schräg nach außen verläuft, oder daß die Entlüftungsöffnung (42) in dem ringförmigen des Deckels (14) ausgebildet ist.

7. Isolierkanne nach einem der Ansprüche 1 bis 6, dadurch gekennzeichnet, daß der Deckel (14) einen inneren, ringförmigen Steg (32) aufweist, und daß in den inneren, ringförmigen Steg (32) ein kreuzförmiges Kunststoffteil (44) eingesetzt ist.

8. Isolierkanne nach einem der Ansprüche 1 bis 7 , dadurch gekennzeichnet, daß der obere Randbereich (26) des Innenbehälters (16) nach außen abgeschrägt ist.

9. Isolierkanne nach einem der Ansprüche 1 bis 8, dadurch gekennzeichnet, daß der Außenbehälter (18) und der Kunststoff-Schaum (20) gemeinsam durch einen Kunststoff mit vernetzter Oberfläche, insbesondere Polyamid oder POM, gebildet werden.

10. Isolierkanne nach einem der Ansprüche 1 bis 9, dadurch gekennzeichnet, daß der Außenbehälter (18) aus Polyamid, Polypropylen, ABS oder Polycarbonat besteht, daß als Kunststoffschaum Polyurethan verwendet wird, und daß der Deckel aus weichem Polyamid oder Polycarbonat besteht.

**Claims**

1. An insulated container
   a) with an inner container (16).
   b) with an outer container (18) of impact-resistant plastic,
   c) with foamed plastic (20) between the inner container (16) and the outer container (18), and
   d) with a cover (14) of plastic attachable on the outlet opening, in which
   e) the inner container (16) consists of a special steel and
   f) the cover (14) has an annular stud (34) projecting downwardly which is capable of being brought into engagement via a groove and tongue connection with the upper edge of the inner container (16).

2. An insulated container according to claim 1. in which the inner container (16) has a cylindrical form and the annular stud (34) of the cover (14) is provided with a projection (36) directed radially outwardly, which is received in a recess (22) in the area of the upper outlet opening of the inner container of special steel

3. An insulated container according to claim 2. in which the recess is formed as a crimp.

4. An insulated container according to one of claims 1 to 3. in which the under side of the outer container (18) is provided with a large recess (28) for the acceptance of a complementary elevation (30) on the surface of the cover (14).

5. An insulated container according to one of claims 1 to 4. in which a ventilation opening (42, 46. 48) is provided in the cover (14).

6. An insulated container according to claim 5. in which the ventilation opening (46. 48) extends from the middle of the cover (14) diagonally outwardly, or the ventilation opening (42) is formed in the annular stud (34) section of the cover (14).

7. An insulated container according to one of claims 1 to 6. in which the cover (14) has an inner, annular stud (32), and a cross-shaped plastic piece (44) is placed in the inner, annular stud (32).

8. An insulated container according to one of claims 1 to 7, in which the upper edge section (26) of the inner container (16) is shaped in an outward angle.

9. An insulated container according to one of claims 1 to 8, in which the outer container (18) and the foamed plastic (20) are formed jointly by a plastic with cross-linked surface, especially polyamide or POM.

10. An insulated container according to one of claims 1 to 9, in which the outer container (18) consists of polyamide, polypropylene, ABS or polycarbonate, polyurethane is used as foamed plastic and the cover consists of soft polyamide or polycarbonate.

## Revendications

1. Pot-verseur isolant, comprenant
   a) un réceptacle intérieur (16),
   b) un réceptacle extérieur (18) réalisé en matière plastique à l'épreuve des chocs,
   c) une mousse plastique (20) entre le réceptacle intérieur (16) et le réceptacle extérieur (18), et
   d) un couvercle de matière plastique (14) pouvant être fixé sur l'ouverture de versage, caractérisé par les propriétés suivantes :
   e) le réceptacle intérieur (16) est réalisé en acier spécial; et
   f) le couvercle (14) présente une nervure annulaire (34) s'écartant vers le bas, qui peut être amenée en prise avec la région du bord supérieur du réceptacle intérieur (16) par un raccord du type à rainure et languette.

2. Pot-verseur isolant suivant la revendication 1, caractérisé en ce que le réceptacle intérieur (16) a une forme cylindrique, et en ce que la nervure annulaire (34) du couvercle (14) est pourvue d'une saillie (36) dirigée radialement vers l'extérieur, qui est logée dans un enfoncement (22) prévu dans la région de l'ouverture de versage supérieure du réceptacle intérieur (16) en acier spécial.

3. Pot-verseur isolant suivant la revendication 2, caractérisé en ce que l'enfoncement (22) est réalisé sous forme de moulure.

4. Pot-verseur isolant suivant l'une des revendications 1 à 3, caractérisé en ce que la face inférieure du réceptacle extérieur (18) est pourvue d'un creux de grande surface (28) destiné à recevoir une élévation de forme complémentaire (30) prévue à la surface du couvercle (14).

5. Pot-verseur isolant suivant l'une des revendications 1 à 4, caractérisé par un orifice de dégagement d'air (42, 46, 48) prévu dans le couvercle (14).

6. Pot-verseur isolant suivant la revendication 5, caractérisé en ce que l'orifice de dégagement d'air (46, 48) part en oblique vers l'extérieur depuis le centre du couvercle (14), ou en ce que l'orifice de dégagement d'air (42) est pratiqué dans la nervure annulaire (34) du couvercle (14).

7. Pot-verseur isolant suivant l'une des revendications 1 à 6, caractérisé en ce que le couvercle (14) présente une nervure annulaire intérieure (32) et en ce qu'une pièce de matière plastique cruciforme (44) est insérée dans la nervure annulaire intérieure (32).

8. Pot-verseur isolant suivant l'une des revendications 1 à 7, caractérisé en ce que la région du bord supérieur (26) du réceptacle intérieur (16) est biseautée vers l'extérieur.

9. Pot-verseur isolant suivant l'une des revendications 1 à 8, caractérisé en ce que le réceptacle extérieur (18) et la mousse plastique (20) sont constitués conjointement par une matière synthétique à surface réticulée, en particulier du polyamide ou du POM.

10. Pot-verseur isolant suivant l'une des revendications 1 à 9, caractérisé en ce que le réceptacle extérieur (18) est réalisé en polyamide, polypropylène, ABS ou polycarbonate, que l'on utilise un polyuréthanne comme mousse plastique et en ce que le couvercle est réalisé en polyamide ou polycarbonate non rigides.

FIG. 2

FIG. 1

FIG. 3

FIG. 4

FIG. 5

FIG. 6

FIG. 7